# DEMANDE DE BREVET EUROPEEN

(11) **EP 4 702 839 A1**
(43) Date de publication de la demande: **04.03.2026**
(21) Numéro de dépôt: 25169905.4
(22) Date de dépôt: 10.04.2025
(51) Int. Cl.: A01M 7/00

(54) **SYSTÈME DE PULVÉRISATION AVEC FONCTION DE RINÇAGE AMÉLIORÉE**

(30) Priorité: 28.08.2024 FR 2409195
(71) Demandeur: Exel Industries, 51200 Epernay (FR)
(72) Inventeur: LOPES, Alcidio, 51200 EPERNAY (FR); CARLIER, Yohann, 51480 OEUILLY (FR)
(74) Mandataire: Bandpay & Greuter

(57) **Abrégé**

La présente invention vise un système de pulvérisation comprenant une cuve principale (R1), une pompe primaire (P1), et une pompe de récupération (P2), des ensembles de traitement (T1,T2) comprenant une pluralité de buses de pulvérisation (8) et un panneau récupérateur (1), chaque panneau récupérateur comprenant une paroi de récupération (10), un bac récupérateur (2), et un orifice bas (2b), le système comprenant un circuit de pompage primaire (C1) qui admet soit du produit de traitement, soit du produit de rinçage en fonction de la position (E1,E2) d'une première vanne de sélection (V1), un circuit de récupération (C2) reliant les orifices bas à la cuve principale via la pompe de récupération, le système comprenant en outre un circuit de rinçage à flux inversé (C4) configuré pour faire circuler du produit de rinçage vers les orifices bas, afin de remplir les bacs récupérateurs par le dessous et de les faire déborder.

## Description

### DOMAINE TECHNIQUE

La présente invention concerne le domaine des systèmes de pulvérisation de produit qui sont utilisés dans les exploitations agricoles, notamment les exploitations viticoles ou arboricoles. Lesdits systèmes de pulvérisation sont utilisés pour appliquer des produits, tels que par exemple des produits phytosanitaires ou des engrais liquides, sur une végétation cible, e.g. feuillage d'arbre, feuillage d'arbuste, feuillage de vigne, etc.

### ETAT DE LA TECHNIQUE

Dans ce domaine, il existe des systèmes de pulvérisation agricole pour engin agricole, notamment viticole ou arboricole, comprenant des panneaux récupérateurs agencés face à face, deux par deux, encadrant un rang de végétation, e.g. un rang de vigne.

Ces panneaux récupérateurs sont associés à une pluralité de buses de pulvérisation par l'intermédiaire desquels du liquide de traitement, tel que du produit phytosanitaire ou de l'engrais liquide, est pulvérisé sur des végétaux à traiter agencés entre deux panneaux récupérateurs se faisant face. Certains de ces systèmes utilisent des diffuseurs d'air sont prévus pour produire un flux d'air qui porte ou souffle le liquide de traitement vers les végétaux à traiter.

Chacun de ces panneaux récupérateurs comprend un bac récupérateur formant la base du panneau récupérateur et comprenant une ouverture de récupération, orientée vers le haut, par l'intermédiaire de laquelle le bac récupérateur récupère du liquide de traitement pulvérisé en surplus sur les végétaux à traiter, notamment par les buses de pulvérisation sur qui lui font face. Le liquide de traitement ainsi récupéré par le bac récupérateur peut être aspiré pour être pulvérisé à nouveau sur les végétaux à traiter, par exemple au moyen d'une pompe reliée au bac récupérateur par l'intermédiaire d'un circuit d'aspiration.

Un exemple d'un tel système est connu du document FR3110814.

Lorsque du liquide de traitement est pulvérisé sur les végétaux à traiter, des déchets végétaux, tels que des résidus de feuilles, des capuchons floraux ou encore des brindilles, peuvent être arrachés des végétaux à traiter et venir s'accumuler dans le bac récupérateur.

Cette accumulation de déchets végétaux pose problème car elle limite le volume de liquide de traitement qui peut être récupéré dans le bac récupérateur, ce qui peut conduire à un débordement du bac récupérateur. Elle peut encore entraver l'aspiration du liquide de traitement récupéré pour le pulvériser à nouveau, ce qui peut aussi conduire au débordement du bac récupérateur.

De plus on constate que le bac récupérateur accumule aussi au fur et à mesure des résidus liquide visqueux voire pâteux de produits phytosanitaires et/ou de produits de traitement utilisés précédemment. Il demeure ainsi un besoin de pouvoir évacuer non seulement les déchets solides comme les feuilles mais aussi les résidus visqueux ou pâteux de produits de traitement utilisés précédemment, qui ne peuvent pas être évacués par un flux d'air.

### PRESENTATION DE L'INVENTION

Dans ce contexte, la présente invention a pour objet un système de pulvérisation comprenant une fonction de rinçage à flux inversé, le système comprenant une cuve principale, optionnellement une cuve de rinçage, une pompe primaire, et une pompe de récupération, le système comprenant des ensembles de traitement, chaque ensemble de traitement comprenant une pluralité de buses de pulvérisation et un panneau récupérateur, chaque panneau récupérateur comprenant une paroi de récupération, un bac récupérateur, et un orifice bas de bac, le système comprenant un circuit de pompage primaire qui admet soit du produit de traitement, soit du produit de rinçage en fonction de la position d'une première vanne de sélection, et un circuit de dispense à destination des buses, le système comprenant un circuit de récupération reliant les orifices bas de bac à la cuve principale via la pompe de récupération, caractérisé en ce que le système comprend en outre un circuit de rinçage à flux inversé configuré pour faire circuler via au moins un clapet anti-retour du produit de rinçage vers les orifices bas de bac, afin de remplir les bacs récupérateurs par le dessous et de les faire déborder.

Grâce à ces dispositions, on génère un flux à rebours qui permet de se débarrasser des déchets, résidus et autres items qui ont pu s'accumuler dans le bac récupérateur, et qui tombent ainsi au sol, emportés par le flux de débordement.

On utilise astucieusement la pompe primaire existante et un circuit spécifique de rinçage à rebours pour nettoyer les bacs récupérateurs sans avoir besoin de le faire manuellement.

Comme il sera vu plus en détail plus loin, le bac récupérateur comprend un ou plusieurs organes de rétention des élément solides, organes de type grille et/ou filtre.

Les feuilles retenues par les organes de rétention et autres résidus de produit phytosanitaires non drainés par la récupération normale sont ainsi évacués par le flux de débordement, et les organes de rétention (grille et filtre) sont au passage nettoyés par le flux circulant à l'inverse du sens normal de récupération.

Pour le rinçage, et en particulier pour le rinçage à flux inversé proposé ici, la pompe primaire est alimentée par le circuit de rinçage et non par le produit présent dans la cuve principale.

De plus, on remarque que la cuve de rinçage est optionnelle, car le liquide de rinçage peut être fourni par une adduction d'eau si disponible.

Selon une réalisation, le circuit de rinçage à flux inversé est activé au moyen d'un dispositif de distribution hydraulique.

Sous le terme « dispositif de distribution hydraulique » il faut comprendre un dispositif qui dirige sélectivement la sortie de la pompe primaire vers l'un des circuits utilisateurs, par exemple le circuit de dispense, le ou les circuits de retour vers la cuve principale, ou encore le circuit de rinçage à rebours d'intérêt particulier ici.

Dit autrement, le dispositif de distribution hydraulique dirige la sortie de la pompe primaire, selon les circonstances et les modes d'opération, vers le circuit de dispense et les buses, ou vers les orifices bas de bac via le ou les clapets anti-retour, ou encore vers un retour vers la cuve principale.

Le dispositif de distribution hydraulique peut comprendre une ou plusieurs vannes 2 voies et/ou une ou plusieurs vannes 3 voies. Les vannes en question peuvent être à manœuvre manuelle ou peuvent être motorisées.

Selon une réalisation, il est prévu une canalisation individuelle par bac récupérateur, et un clapet anti-retour par canalisation individuelle.

Cette disposition avantageuse permet une séparation des chemins de rinçage inversé. Chaque canalisation individuelle est alimentée indépendamment des autres par le flux de rinçage inversé, ce qui évite d'avoir un effet de vases communicants entre les différents bacs récupérateurs. Ceci permet un fonctionnement correct sur sol en pente notamment en situation de dévers latéral où les différents bacs récupérateurs ne sont pas à la même hauteur par rapport à l'horizontale.

Selon une réalisation, la pompe de récupération comprend autant d'entrées que de bacs récupérateurs, chacune des entrées étant alimentée par une canalisation individuelle.

Moyennant quoi, la fonction de séparation entre les canalisations individuelles est réalisée jusqu'à l'entrée de la pompe de récupération. Ainsi, les canalisations individuelles de bac ne communiquent pas entre elles, ni dans le circuit de rinçage inversé ni dans le circuit de récupération classique.

Selon une réalisation, le bac récupérateur comprend une grille d'arrêt et un filtre d'aspiration, la grille d'arrêt étant agencée au dessus du filtre, en partie supérieure de bac, et le filtre d'aspiration étant agencé au voisinage de l'orifice bas de bac (i.e. à l'endroit de piquage de drainage), en partie inférieure de bac.

Certains déchets sont arrêtés par la grille, d'autres déchets plus fins sont arrêtés par le filtre.

Selon une réalisation, le bac récupérateur comprend un système de bonde, manuelle ou à commande motorisée.

Ce système de bonde permet de purger le contenu du bac récupérateur, par exemple après la séquence de rinçage à flux inversé. Cette purge complémentaire permet d'éliminer par exemple les déchets non flottants qui n'auraient pas été entraîné par le flux de débordement.

Selon une réalisation, le dispositif de distribution hydraulique comprend au moins deux vannes 2 voies.

Une première vanne 2 voies libère le passage vers le circuit de dispense et vers les buses de pulvérisation. Une deuxième vanne 2 voies libère le passage vers le circuit de rinçage à rebours. Les premières et deuxièmes vannes 2 voies en question sont commandées selon une logique exclusive l'une par rapport à l'autre.

Selon d'autres réalisations, le dispositif de distribution hydraulique peut comprendre une ou plusieurs vannes 3 voies, voire une vanne 4 voies.

Selon une réalisation, la première vanne de sélection est une vanne 3 voies.

Ladite vanne 3 voies permet de sélectionner l'alimentation de la pompe primaire soit à partir de la cuve principale qui contient en conditions nominales le produit de traitement, soit à partir de la cuve de rinçage ou alternativement d'une adduction d'eau.

Selon une réalisation, le système de pulvérisation comprend en outre une unité de commande configurée pour piloter la première vanne de sélection et le dispositif de distribution hydraulique.

Dans le cas des vannes motorisées, l'unité de commande active électriquement l'une ou l'autre des vannes disponibles pour diriger le flux sortant de la pompe primaire vers le circuit souhaité, en fonction du mode opératoire courant. La séquence de rinçage inversé peut ainsi être réalisée par des moyens de commande automatiques.

Selon une réalisation, pour chaque ensemble de traitement, la pluralité de buses de pulvérisation et le panneau récupérateur forment un ensemble intégré. Selon une disposition alternative, le panneau récupérateur ne contient pas les buses qui sont portées par une rampe/colonne de buses distincte.

Selon un autre aspect de l'invention, celle-ci a trait à un procédé de pulvérisation et rinçage dans un système de pulvérisation comprenant une cuve principale, optionnellement une cuve de rinçage, une pompe primaire, et une pompe de récupération, le système comprenant des panneaux de traitement, chaque panneau de traitement comprenant une pluralité de buses de pulvérisation, une paroi de récupération, un bac récupérateur, et un orifice bas de bac, le système comprenant un circuit de pompage primaire qui admet soit du produit de traitement, soit du produit de rinçage en fonction de la position d'une première vanne de sélection, et un circuit de dispense à destination des buses, le système comprenant un circuit de récupération reliant les orifices bas des bacs à la cuve principale via la pompe de récupération, le système comprenant une vanne de pulvérisation, une vanne de rinçage inversé et des vannes de recirculation vers la cuve principale, dans lequel le système de pulvérisation comprend en outre une unité de commande, le procédé comprenant :
- sélectionner l'entrée de rinçage pour alimenter le circuit de pompage primaire,
- arrêter ou maintenir à l'arrêt la pompe de récupération,
- fermer la vanne de pulvérisation,
- fermer la ou les vannes de recirculation vers la cuve principale,
- ouvrir la vanne de rinçage inversé,
- activer la pompe primaire,
- attendre pendant une temporisation prédéfinie,
à la suite de quoi la séquence de rinçage inversé est terminée.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en vue de d'élévation de deux ensembles de traitement, chacun avec panneau récupérateur et buses de pulvérisation, les deux ensembles de traitement encadrant un rang de vigne ;
La figure 2 montre un exemple de schéma hydraulique du système de pulvérisation et rinçage selon un mode de réalisation de la présente invention ;
La figure 3 montre un autre exemple de schéma hydraulique du système de pulvérisation et rinçage selon un mode de réalisation générique de la présente invention :
La figure 4 illustre en perspective d'un ensemble de traitement avec panneau récupérateur et buses de pulvérisation ;
La figure 5 représente une vue de coupe schématique d'un bac récupérateur ;
La figure 6 montre encore un autre exemple de schéma hydraulique du système de pulvérisation et rinçage selon un autre mode de réalisation de la présente invention ;
La figure 7 illustre une variante du circuit hydraulique de récupération ;
La figure 8 montre un schéma de principe fonctionnel illustrant les fonctions de l'unité de commande ;
La figure 9 montre un exemple de séquence selon le procédé proposé.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de pulvérisation de produit sous forme liquide, le produit étant destiné à être projeté sous forme de gouttelettes sur une végétation cible par exemple des feuillages d'arbuste ou des feuillages de vignoble.

La végétation cible VG peut typiquement être un vignoble ou un verger, sans que ceci constitue une limitation aux cas d'applications possibles de la présente invention.

Le système de pulvérisation peut être associé à un engin agricole de type tracteur enjambeur, ou à un tracteur conventionnel. Dans un autre cas d'application, le système de pulvérisation est associé à un engin agricole traîné. Le système de pulvérisation peut être aussi porté, semi porté, automoteur, voire formé comme un robot autonome.

Selon diverses réalisations, le système de pulvérisation peut comprendre une pluralité d'ensembles de traitement, généralement agencés par paires, chaque paire étant destinée à traiter un rang de végétation. Par exemple, le système peut comprendre deux ensembles de traitement pour traiter un rang de végétation ou bien 4 ensembles de traitement pour traiter 2 rangs de végétation, ou bien 6 ensembles de traitement pour traiter 3 rangs de végétation, et cetera.

En configuration d'utilisation, les ensembles de traitement s'étendent sensiblement en position verticale sur une hauteur correspondant idéalement à la hauteur de feuillage de la végétation à traiter. La direction de pulvérisation de produit s'étend sensiblement à l'horizontale.

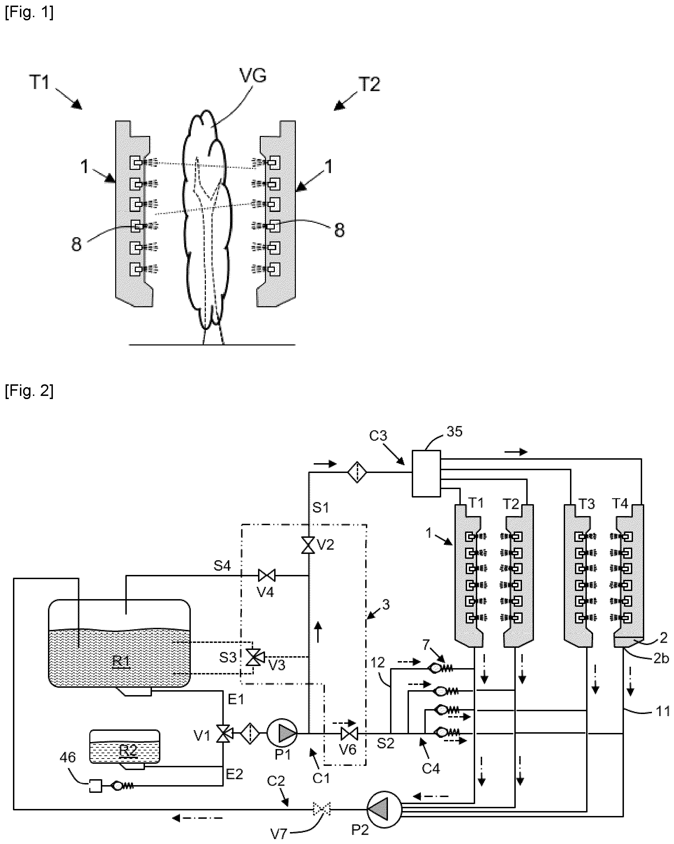

En configuration de traitement, comme visible à la figure 1, deux ensembles de traitement T1, T2 encadrent un rang de végétation VG ou autrement dit un rang de végétation est interposé entre deux ensembles de traitements situés en vis-à-vis l'un de l'autre, et qui pulvérisent du produit de traitement en direction de la végétation et aussi en direction de l'autre ensemble de traitement.

Chaque ensemble de traitement comprend une pluralité de buses de pulvérisation 8 et un panneau récupérateur 1. Les buses de pulvérisation 8 sont disposées les unes à la suite des autres selon une direction verticale dans une configuration de pulvérisation, avec un espacement inter buse d'une vingtaine de centimètres par exemple. Selon le type de végétation à traiter, le nombre de buses peut aller par exemple de 3 à 10.

Chaque panneau récupérateur 1 comprenant une paroi de récupération 10 sur laquelle ruisselle du surplus de produit qui a été pulvérisé par les buses de l'autre ensemble de traitement de la paire, et qui n'a pas été intercepté par des feuilles de végétation.

La hauteur du panneau récupérateur est notée H1, elle est de préférence en cohérence avec la hauteur totale des jets produits par les buses de pulvérisation de l'ensemble de traitement opposé. Par exemple H1 peut être compris entre 80 cm et 200 cm.

La largeur du panneau récupérateur est notée L1. Par exemple L1 peut être compris entre 25 cm et 50 cm.

Selon une configuration possible, pour l'ensemble de traitement situé à gauche du rang traité, le panneau récupérateur 10 se trouve en arrière par rapport aux buses, en référence au sens de marche normal de traitement vers l'avant, alors que pour l'ensemble de traitement situé à droite du rang traité, le panneau récupérateur se trouve en avant par rapport aux buses de sorte que chaque panneau récupérateur fait face à la colonne de buses placée en vis-à-vis du coté opposé.

Dans la partie inférieure du panneau récupérateur se trouve un bac récupérateur 2.

Le bac récupérateur 2 collecte le produit de traitement qui ruisselle depuis le panneau de récupération 10. Le panneau récupérateur 10 peut comprendre des stries ou rainures verticales pour convier le ruissellement vers le bac même si le système est incliné (e.g. montée ou descente).

Chaque bac récupérateur 2 comprend un orifice bas de bac 2b. Une tuyauterie de récupération 11 est raccordée à cet orifice bas de bac 2b. La tuyauterie de récupération 11 est raccordée à son autre extrémité à une deuxième pompe appelée pompe de récupération notée P2. Le circuit de récupération C2 relie les orifices bas de bac à la cuve principale via la pompe de récupération P2.

Le bac récupérateur comprend une grille d'arrêt 4 et un filtre d'aspiration 5. La grille, le filtre et les parois du bac récupérateur délimitent ensemble un volume intérieur du bac noté 24.

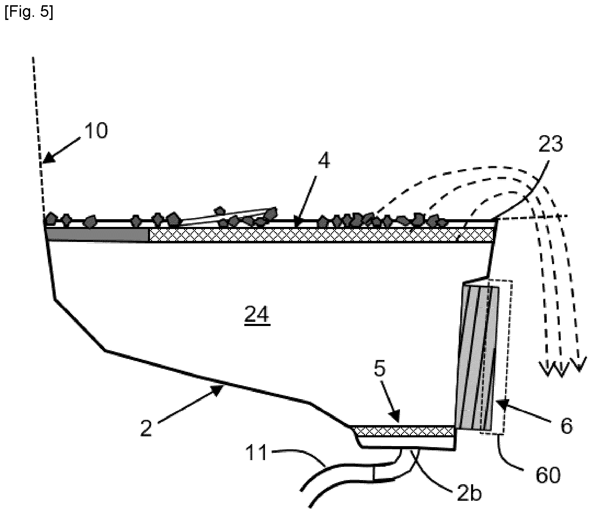

Comme illustré à la figure 5, la grille d'arrêt 4 est agencée au dessus du filtre 5, en partie supérieure de bac. Le filtre d'aspiration 5 est agencé au voisinage de l'orifice bas de bac, à savoir à l'endroit de piquage de drainage, en partie inférieure de bac. Le filtre d'aspiration 5 protège la pompe de récupération de l'ingestion de corps indésirables qui pourraient l'endommager.

La grille d'arrêt 4 est amovible, ce qui permet de procéder à un nettoyage mécanique de la grille e.g. à la brosse.

Le bac récupérateur 2 comprend un système de bonde 6. Selon l'exemple illustré, le système de bonde est formé par un bouchon à visser 60. D'une manière général le système de bonde 6 peut être manuel. Dans une variante non illustrée, le système de bonde est motorisé, e.g. commandé via un actuateur.

Le lecteur pourra se référer au document FR3110814 pour des compléments de description à propos du bac récupérateur.

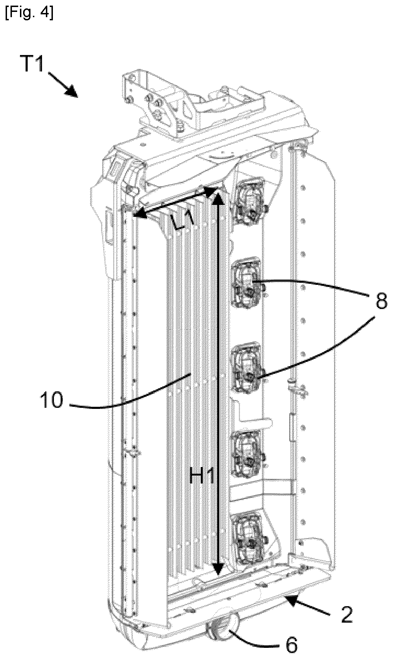

Selon l'exemple illustré, notamment à la figure 4, les buses de pulvérisation 8 et le panneau récupérateur 10 forment un ensemble intégré.

Selon une disposition alternative non illustrée, le panneau récupérateur peut ne pas contenir les buses, les buses étant alors portées par une rampe/colonne de buses distincte en position antérieure ou postérieure (par rapport au sens de marche), de manière que chaque panneau récupérateur fait face à la colonne de buses placée en vis-à-vis du coté opposé.

En se tournant vers la figure 2, le système de pulvérisation comprend une cuve principale notée R1 et une pompe primaire notée P1. Pour procéder à la pulvérisation de produits de traitement, la pompe primaire P1 aspire du produit de traitement dans la cuve principale R1 et le délivre via un circuit de dispense qui sera détaillé plus loin vers les buses de pulvérisation.

La cuve R1 est généralement de grande taille, elle est supposée connue en soi donc non décrite en détail ici. De même la pompe primaire est supposée connu et donc non décrite en détail ici.

La pompe primaire P1 est aussi utilisée pour le rinçage des canalisations et des buses. Après la fin d'une campagne de pulvérisation, on rince généralement avec de l'eau les circuits qui ont été utilisés.

A cet effet, selon l'exemple illustré aux figures, il est prévu une vanne 3 voies V1 qui permet de sélectionner le liquide à admettre par la pompe primaire, c'est à dire soit le produit de traitement, soit l'eau de rinçage.

D'une façon générique, le système de pulvérisation comprend un circuit de pompage primaire C1 à sélection, qui admet soit du produit de traitement (position E1 de la vanne 3 voies V1), soit du produit de rinçage (position E2 de la vanne 3 voies V1).

La vanne 3 voies notée V1 est appelée ici première vanne de sélection. La première vanne de sélection peut être une vanne à commande manuelle avec un levier de commande actionné manuellement par un opérateur, ou bien peut être une vanne motorisée dont la position est contrôlée par un moteur ou un vérin qui lui-même est actionné via une unité de commande électronique.

Le système de pulvérisation comprend optionnellement une cuve de rinçage R2 qui permet de fournir l'eau de rinçage. En complément ou en substitution à la cuve de rinçage, le liquide de rinçage peut être obtenu à partir d'un robinet d'adduction d'eau 46.

Le système de pulvérisation comprend un circuit de dispense C3 à destination des buses 8. Selon l'exemple illustré à la figure 2, lorsque la vanne 2 voies V2 est ouverte, le circuit de pompage primaire C1 pousse du liquide de traitement dans le circuit de dispense C3 qui dessert généralement l'ensemble des buses de pulvérisation. Il peut être prévu un dispositif de sélection 35 pour alimenter sélectivement une ou plusieurs paires d'ensembles de traitement, comme connu en soi et non décrit en détail ici.

Lorsque la vanne 2 voies V2 est ouverte, le dispositif de distribution hydraulique est en position S1.

Le système de pulvérisation comprend en outre un ou plusieurs circuits de retour vers la cuve principale. Ainsi il est prévu une vanne 3 voies (V3) de retour vers la cuve pour la fonction brassage. En outre, il est prévu une vanne 2 voies (V4) de retour vers la cuve pour la fonction de nettoyage de cuve.

D'une façon générique, à la sortie de la pompe primaire, il est prévu un système de distribution hydraulique noté 3 pour diriger le flux de sortie de la pompe primaire vers le circuit souhaité en fonction du mode d'opération courant. Le système de distribution hydraulique dirige la sortie de la pompe primaire P1 vers une seule sortie parmi une pluralité de sorties possibles S1,S2,S3,S4.

Selon une disposition astucieuse du système proposé, le système comprend en outre un circuit de rinçage à flux inversé noté C4 configuré pour faire circuler du produit de rinçage vers les orifices bas de bac 2b, afin de remplir les bacs récupérateurs 2 par le dessous et de les faire déborder.

Le flux de rinçage inversé passe par au moins un clapet anti-retour 7. Le clapet anti-retour 7 évite que le circuit de rinçage à flux inversé C4 ne se remplisse de produit de traitement pendant les opérations normales de traitement et de récupération via les bacs récupérateurs.

Il est prévu une vanne 2 voies (vanne notée V6, sortie notée S2), qui lorsqu'elle est ouverte, dirige la sortie de la pompe primaire P1 vers des canalisations individuelles 12 de bac récupérateur. On remarque que, dans ce mode opératoire, les circuits individuels son parcourus à l'inverse du flux habituel de récupération. Les flèches en trait mixte dénotent le flux habituel de récupération alors que les flèches en trait pointillé dénotent le flux de rinçage inversé. Les flèches en trait plein dénotent le flux de pulvérisation.

Avantageusement, selon l'exemple de réalisation de la figure 2, il est prévu une canalisation individuelle 12 par bac récupérateur, et un clapet anti-retour 7 par canalisation individuelle.

Selon l'exemple illustré à la figure 2, la pompe de récupération comprend autant d'entrées que de bacs récupérateurs, chacune alimentée par une canalisation individuelle.

Selon l'exemple illustré à la figure 2, le système de pulvérisation comprend 4 ensembles de traitement T1 et T2 en vis-à-vis et T3 et T4 en vis-à-vis. Chaque bac récupérateur 2 est raccordé à une canalisation de récupération notée 11.

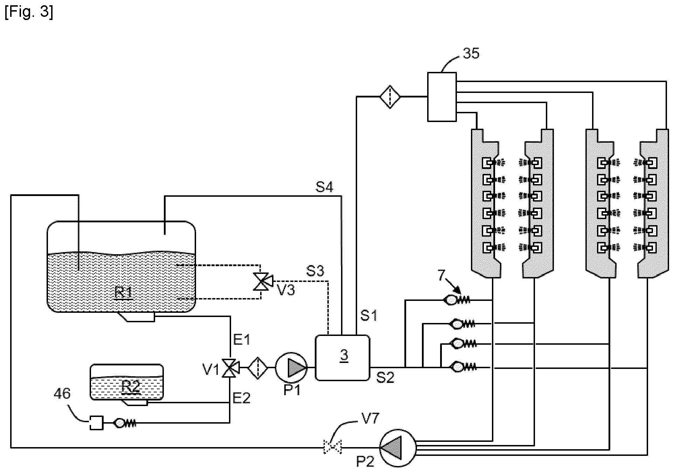

Selon l'exemple illustré à la figure 3, on a représenté de façon générique le dispositif de distribution hydraulique 3 qui permet de sélectionner une des sorties souhaitées pour diriger la sortie de la pompe primaire. En particulier, la sortie S1 alimente le circuit de pulvérisation incluant les buses 8, la sortie S2 dirige le flux de la pompe vers le circuit de rinçage à flux inversé, la sortie S4 dirige le flux de la pompe vers un circuit de rinçage et/ou nettoyage de la cuve principale R1, la sortie S3 dirige le flux de sortie de la pompe primaire vers un dispositif de brassage à l'intérieur de la cuve (avec deux options sélectionnables via la vanne 3 voies V3).

Selon d'autres possibilités, le dispositif de distribution hydraulique 3 peut être formé par une ou plusieurs vannes 3 voies, voire comporter une vanne 4 voies.

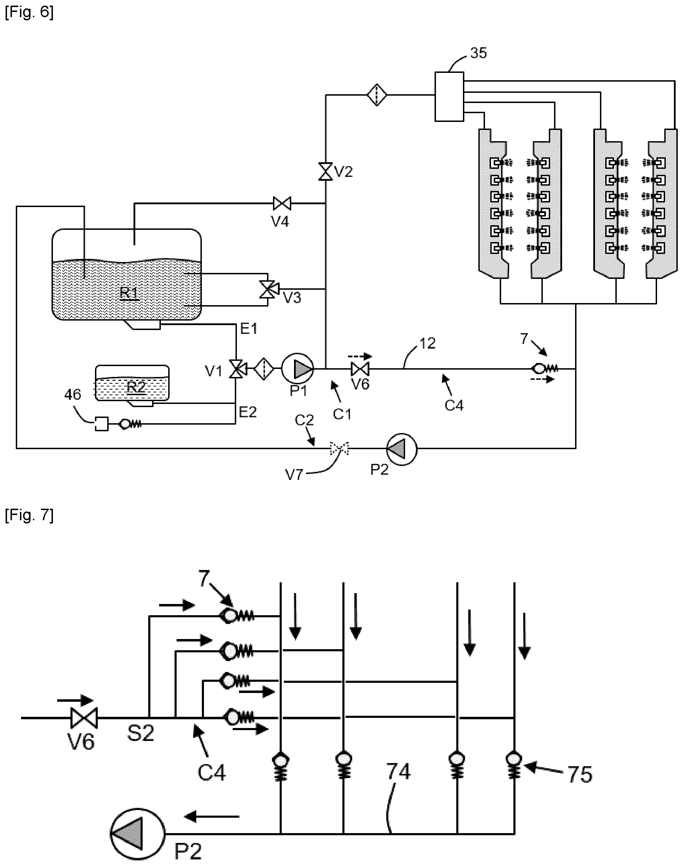

Selon l'exemple illustré à la figure 6, la pompe de récupération P2 ne comprend qu'une entrée alimentée par un collecteur 74 situé en aval des clapets anti-retour 75. Il est prévu un clapet anti-retour 75 sur chacune des canalisations 11 qui permettent de raccorder l'orifice bas 2b de bac à la pompe de récupération P2.

Selon un exemple de réalisation, les clapets anti-retour 7 et 75 sont placés à proximité du piquage sur l'orifice bas de bac, de manière à ce que d'une part le flux de récupération normale et d'autre part le flux de rinçage à rebours ne se polluent pas l'un l'autre.

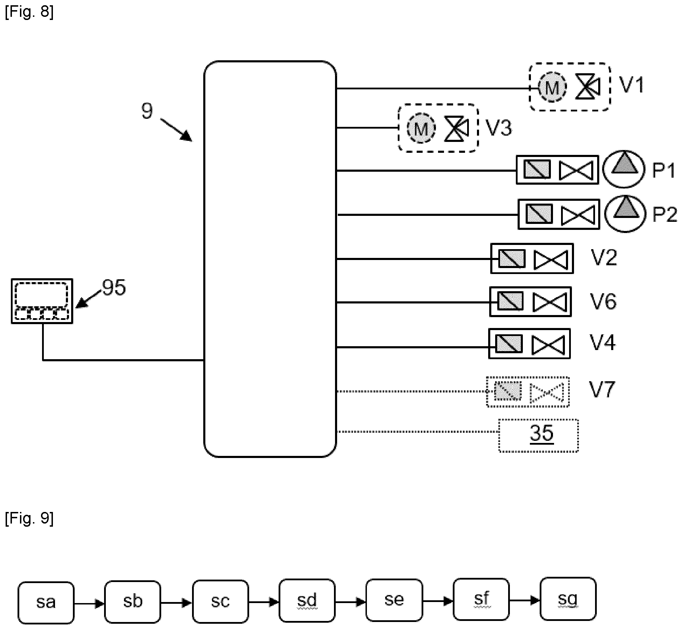

À la figure 8, on a illustré le schéma de principe dans une version automatisée du système de pulvérisation tel que proposé. L'unité de commande 9 reçoit des instructions à partir d'un terminal utilisateur 95. L'unité de commande 9 pilote les sorties notamment des électrovannes qui commandent le circuit hydraulique alimentant la pompe primaire P1 et la pompe de récupération P2. L'unité de commande 9 pilote les sorties qui permettent de sélectionner la position des vannes 3 voies V1 et V3. L'unité de commande 9 pilote les sorties qui permettent de sélectionner la position des vannes 2 voies V2 et V6. L'unité de commande 9 pilote les sorties qui permettent de sélectionner la position des vannes 2 voies V4 et V7.

À la figure 9, on a illustré les étapes (notées sa à sg) du procédé proposé, que ce dernier soit réalisé par des moyens automatiques ou que ce dernier soit réalisé par des commandes manuelles.

Le procédé proposé comprend :
sa- sélectionner l'entrée de rinçage E2 pour alimenter le circuit de pompage primaire C1,
sb- arrêter ou maintenir à l'arrêt la pompe de récupération P2,
sc- fermer la vanne de pulvérisation V2,
sd- fermer la ou les vannes de recirculation vers la cuve principale V3 et V4,
se- ouvrir la vanne de rinçage inversé V6, en vue d'alimenter le circuit C4,
sf- activer la pompe primaire P1,
sg- attendre pendant une temporisation prédéfinie,
à la suite de quoi la séquence de rinçage inversé est terminée.

**Au** début de la séquence de rinçage à flux inversé, la pompe primaire P1 pousse du liquide de rinçage dans le circuit de rinçage à flux inversé C4 et les volumes intérieurs 24 des bacs récupérateurs se remplissent progressivement. Au bout d'un moment, le liquide de rinçage déborde au-dessus du bord 23 du bac récupérateur et entraîne avec lui les déchets qui se trouvaient sur la grille d'arrêt 4.

La temporisation prédéfinie et déterminer pour que le débordement au-dessus du bord 23 soit suffisamment conséquent pour pouvoir entraîner les déchets et les résidus des produits de traitement précédents, qui eux peuvent se trouver entre la grille et le filtre.

D'une manière générique, l'unité de commande 9 pilote le dispositif de distribution hydraulique 3, quelle que soit sa composition, avec des vannes 2 voies, des vannes 3 voies ou d'autres organes tel que déjà mentionné plus haut.

L'unité de commande 9 pilote aussi des distributeurs pour alimenter en énergie hydraulique la pompe primaire P1 et la pompe de récupération P2.

On notera par ailleurs que l'invention n'est pas limitée aux modes de réalisations décrits précédemment. Il apparaîtra en effet à l'homme du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

## Revendications

1. Système de pulvérisation comprenant une fonction de rinçage à flux inversé,
le système comprenant une cuve principale (R1), optionnellement une cuve de rinçage (R2), une pompe primaire (P1), et une pompe de récupération (P2), le système comprenant des ensembles de traitement (T1,T2,T3,T4), chaque ensemble de traitement comprenant une pluralité de buses de pulvérisation (8) et un panneau récupérateur (1), chaque panneau récupérateur comprenant une paroi de récupération (10), un bac récupérateur (2), et un orifice bas de bac (2b), le système comprenant un circuit de pompage primaire (C1) qui admet soit du produit de traitement, soit du produit de rinçage en fonction de la position (E1,E2) d'une première vanne de sélection (V1), et un circuit de dispense (C3) à destination des buses, le système comprenant un circuit de récupération (C2) reliant les orifices bas de bac à la cuve principale via la pompe de récupération,
**caractérisé en ce que** le système comprend en outre un circuit de rinçage à flux inversé (C4) configuré pour faire circuler via au moins un clapet anti-retour (7) du produit de rinçage vers les orifices bas de bac, afin de remplir les bacs récupérateurs par le dessous et de les faire déborder.

2. Système de pulvérisation selon la revendication 1, dans lequel le circuit de rinçage à flux inversé est activé au moyen d'un dispositif de distribution hydraulique (3 ; V2,V6).

3. Système de pulvérisation selon la revendication 1, dans lequel il est prévu une canalisation individuelle (11) par bac récupérateur, et un clapet anti-retour (7) par canalisation individuelle.

4. Système de pulvérisation selon la revendication 3, dans lequel la pompe de récupération comprend autant d'entrées que de bacs récupérateurs, chacune des entrées étant alimentée par une canalisation individuelle.

5. Système de pulvérisation selon l'une des revendications 1 à 4, dans lequel le bac récupérateur comprend une grille d'arrêt (4) et un filtre d'aspiration (5), la grille d'arrêt étant agencée au dessus du filtre, en partie supérieure de bac, et le filtre d'aspiration (5) étant agencé au voisinage de l'orifice bas de bac (2b), en partie inférieure de bac.

6. Système de pulvérisation selon l'une des revendications 1 à 5, dans lequel le bac récupérateur comprend un système de bonde (6), manuelle ou à commande motorisée.

7. Système de pulvérisation selon l'une des revendications 1 à 6, dans lequel le dispositif de distribution (3) comprend au moins deux vannes 2 voies (V2,V6).

8. Système de pulvérisation selon l'une des revendications 1 à 7, dans lequel la première vanne de sélection (V1) est une vanne 3 voies.

9. Système de pulvérisation selon l'une des revendications 1 à 8, comprenant en outre une unité de commande (9) configurée pour piloter la première vanne de sélection et le dispositif de distribution hydraulique (3).

10. Procédé de pulvérisation et rinçage dans un système de pulvérisation comprenant une cuve principale (R1), optionnellement une cuve de rinçage (R2), une pompe primaire (P1), et une pompe de récupération (P2), le système comprenant des panneaux de traitement (T1,T2) chaque panneau de traitement comprenant une pluralité de buses de pulvérisation, une paroi de récupération, un bac récupérateur, et un orifice bas de bac,
le système comprenant un circuit de pompage primaire (C1) qui admet soit du produit de traitement (E1), soit du produit de rinçage (E2) en fonction de la position d'une première vanne de sélection (V1), et un circuit de dispense à destination des buses, le système comprenant un circuit de récupération reliant les orifices bas des bacs à la cuve principale via la pompe de récupération, le système comprenant une vanne de pulvérisation (V2), une vanne de rinçage inversé (V6) et des vannes de recirculation vers la cuve principale (V3), dans lequel le système de pulvérisation comprend en outre une unité de commande (9), le procédé comprenant :
- sélectionner l'entrée de rinçage (E2) pour alimenter le circuit de pompage primaire (C1)
- arrêter ou maintenir à l'arrêt la pompe de récupération (P2),
- fermer la vanne de pulvérisation (V2),
- fermer la ou les vannes de recirculation vers la cuve principale (V3, V4),
- ouvrir la vanne de rinçage inversé (V6),
- activer la pompe primaire (P1),
- attendre pendant une temporisation prédéfinie,
à la suite de quoi la séquence de rinçage inversé est terminée.
